# EUROPÄISCHE PATENTANMELDUNG

(11) **EP 2 078 578 A1**
(43) Veröffentlichungstag der Anmeldung: **15.07.2009**
(21) Anmeldenummer: 08000384.1
(22) Anmeldetag: 10.01.2008
(51) Int. Cl.: B23K 1/00, B23K 35/02

(54) **Belotung von Löchern, Verfahren zum Beschichten und Lotgutstäbchen**

(71) Anmelder: SIEMENS AKTIENGESELLSCHAFT, 80333 München (DE)
(72) Erfinder: Ladru, Francis-Jurjen, Dr., 13587 Berlin (DE); Reich, Gerhard, 10717 Berlin (DE)
(74) Vertreter: Kaiser, Axel

(57) **Zusammenfassung**

Das erfindungsgemäße Lotgutstäbchen (22) weist ein Stop-off (25) am Ende (28) auf, so dass das Lot nicht aus einer Öffnung heraustropfen kann.

## Beschreibung

Die Erfindung betrifft die Belotung von Löchern, Verfahren zum Beschichten von Bauteilen mit Löchern und Lötgutstäbchen.

Bauteile weisen oft Löcher auf, die verschlossen werden sollen. Bei Turbinenschaufeln sind das Kühlluftlöcher. Diese Bauteile werden dann oft wieder beschichtet und wieder mit Kühlluftlöchern versehen werden.
Beim Wiederbeschichten von Bauteilen mit Kühlluftlöchern ergibt sich oft das Problem des "coat down" und die Entfernung desselben.

Es ist daher Aufgabe der Erfindung eine Belotung von Löchern, insbesondere von Kühlluftlöchern, Verfahren zum Beschichten von Bauteilen mit Löchern und Lotgutstäbchen aufzuzeigen, die oben genanntes Problem lösen.

Die Aufgabe wird gelöst durch ein Lötgutstäbchen gemäß Anspruch 1, ein Verfahren zum Löten gemäß Anspruch 5 und ein Verfahren zum Beschichten gemäß Anspruch 6.

In den Unteransprüchen sind jeweils weitere Maßnahmen aufgelistet, die beliebig miteinander kombiniert werden können, um weitere Vorteile zu erzielen.

Es zeigen
- Figur 1 bis 5: ein Verfahren zum Beschichten von Bauteilen mit Löchern,
- Figur 6, 7: Verfahren zur Belotung von Löchern,
- Figur 8, 9: ein Lotgutstäbchen,
- Figur 10: eine Gasturbine,
- Figur 11: perspektivisch eine Turbinenschaufel,
- Figur 12: perspektivisch eine Brennkammer
- Figur 13: eine Liste von Superlegierungen.

Die Figuren und die Beschreibung stellen nur Ausführungsbeispiele der Erfindung dar.

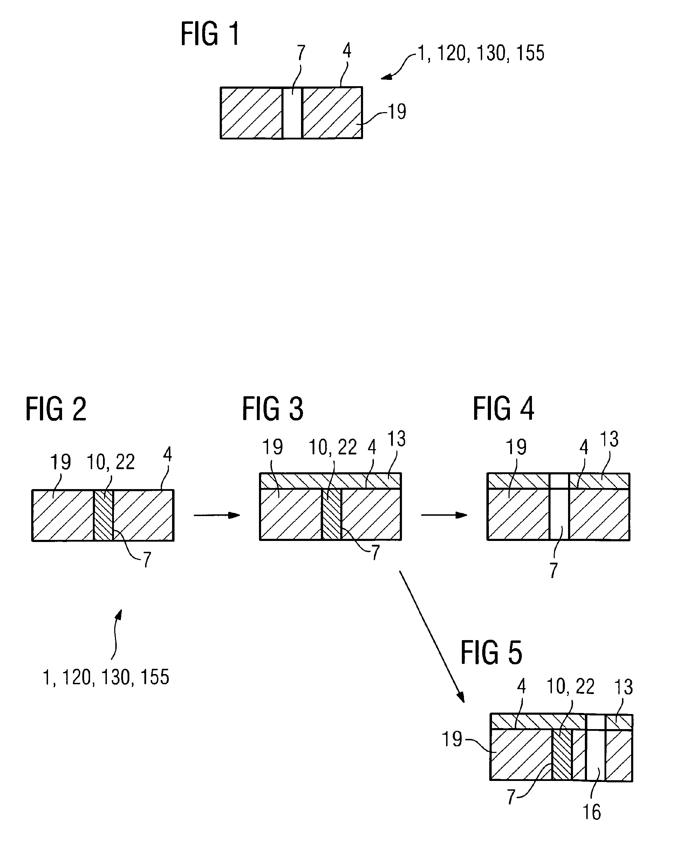

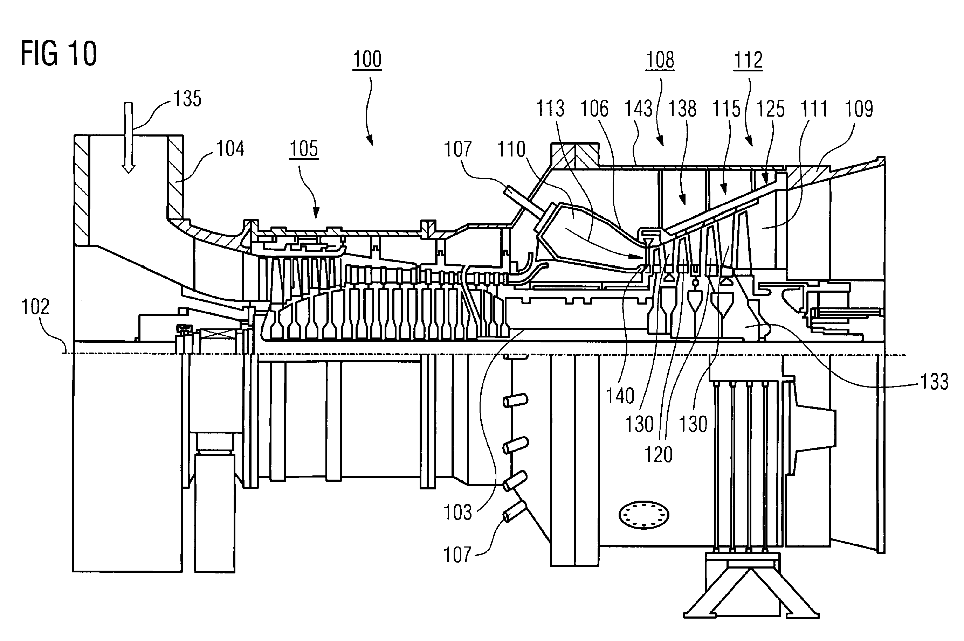

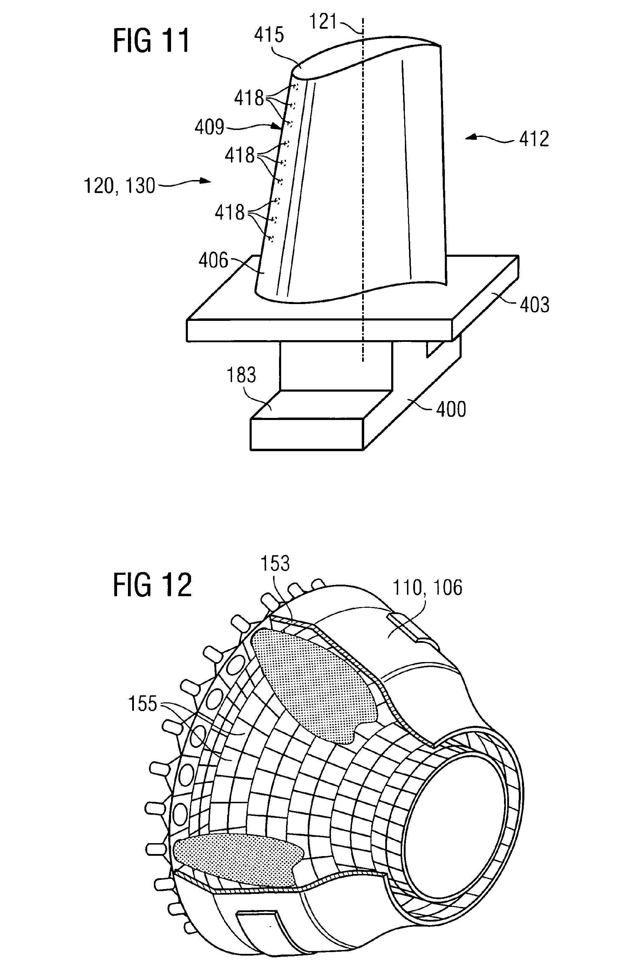

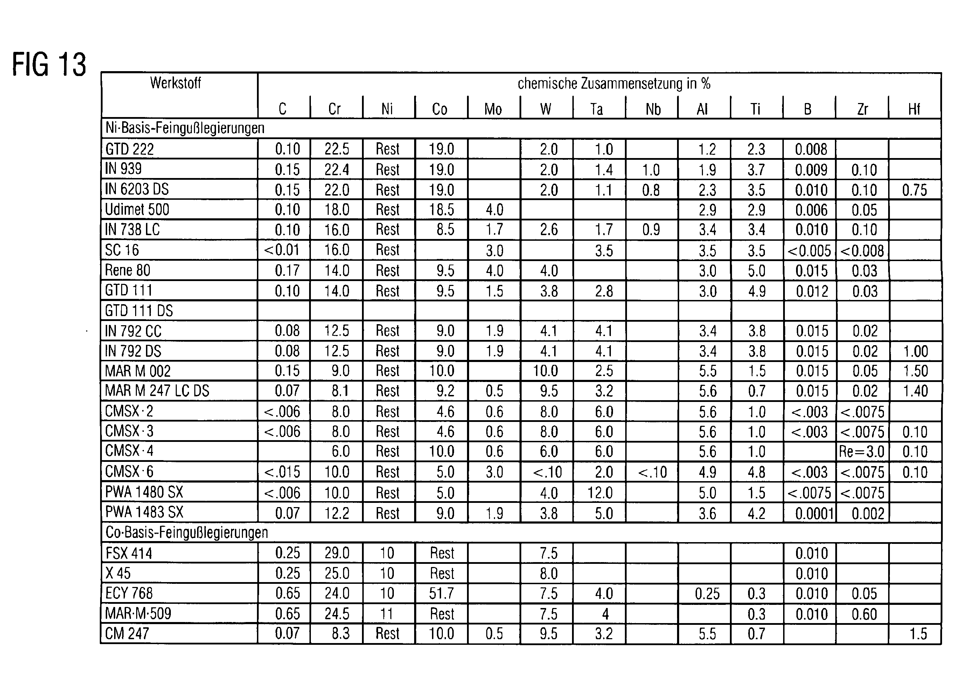

Figur 1 zeigt ein Bauteil 1, 120, 130, 155 (Fig. 10, 11, 12) mit einem durchgehenden Loch 7, wobei vorzugsweise eine Oberfläche 4 des Substrats 19 des Bauteils 1, 120, 130, 155 wieder beschichtet werden soll.
Das Substrat 19 des Bauteils 1, 120, 130, 155 ist vorzugsweise metallisch und weist vorzugsweise eine Superlegierung gemäß Figur 13 auf. Diese werden insbesondere bei Bauteilen 1, 120, 130, 155 für Gasturbinen 100 (Fig. 10) wie z. B. Turbinenschaufeln 120, 130 (Fig. 11) verwendet.

In Figur 2 wird in einem ersten Schritt ein Lot 10 in das Loch 7, insbesondere ein Kühlluftloch 7, eingebracht.

In einem weiteren Verfahrensschritt wird eine Beschichtung 13 auf die Oberfläche 4 des Substrats 19 aufgebracht (Fig. 3). Da das Lot 10 das Loch 7 ausfüllt, ist die Beschichtung 13 auch über dem Lot 10 vorhanden.
Die Beschichtung 13 ist insbesondere bei Turbinenschaufeln 120, 130 eine metallische Haftvermittlerschicht, insbesondere eine MCrAlX-Legierung, auf der vorzugsweise noch eine äußere keramische Schicht (nicht dargestellt) aufgebracht wird. Ebenso kann in der Anordnung gemäß Figur 2 noch eine metallische Schutzschicht auf der Oberfläche 4 des Substrats 19 vorhanden sein, wobei dann das Lot 10 sowohl in dem Substrat 19 als auch in dieser metallischen Schutzschicht vorhanden ist, die das Loch 7 umgibt.

Da jedoch das beschichtete Bauteil 120, 130, 155 wiederum Löcher 16, insbesondere Kühlluftbohrungen aufweisen soll, wird an anderer Stelle, also dort, wo das mit Lot 10 verschlossene Loch 7 sich nicht befindet, ein neues Loch 16 eingebracht (Fig. 5).

Dies ist nicht immer möglich, so dass, wie in Figur 4 dargestellt, das Loch 7 an der Stelle, wo das Lot 10 sich befand, wieder geöffnet wird, so dass das Bauteil 1, 120, 130, 155 wieder ein Kühlluftloch 16 an der Stelle des Lochs 7 aufweist.
Das vollständige Befüllen mit Lot 10, 22 und Wiederöffnen verhindert den "coat down" und hat Vorteile, auch wenn das gesamte Lot wieder entfernt werden muss. Hier eignen sich EDM-Verfahren.

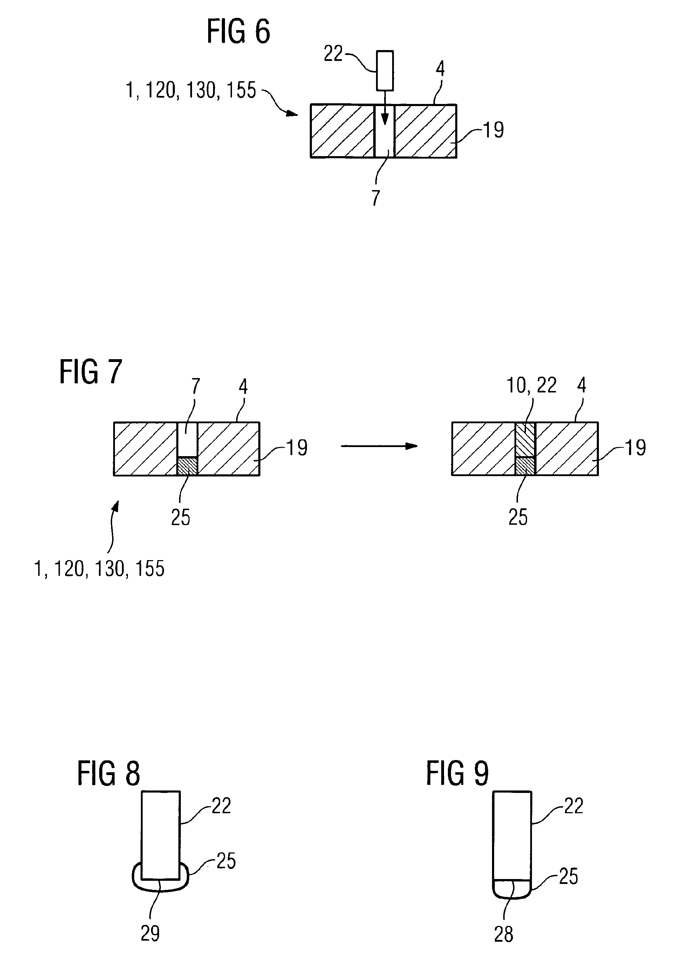

In Figur 6 ist ganz allgemein ein Verfahren zur Belotung eines Substrats 19 mit einem Loch 7 dargestellt.
Das Lot 10 wird hier in Form eines Lotgutstäbchens 22 eingebracht, wobei das Lotgutstäbchen 22, das vorzugsweise eine Draht- oder Stabform aufweist, denselben Außendurchmesser/Außenquerschnitt aufweist wie der Innendurchmesser/Innenquerschnitt des Lochs 7.
So muss zur vollständigen Belotung des Lochs 7 nur das Lotgutstäbchen 22, insbesondere lokal, erwärmt werden und das Loch 7 ist vollständig und gleichmäßig verschlossen. Vorzugsweise entspricht das Volumen des Lotgutstäbchen 22 dem Volumen des Lochs 7. Wenn mehr Lot verwendet wird oder Lot 10 über die Oberfläche 4 übersteht, kann dieses abgetragen werden.

Um zu vermeiden, dass bei der Belotung das Lot 10 in einen Hohlraum hineinfließt oder tropft, wie z. B. bei einem Kühlluftloch einer Turbinenschaufel 120, 130, weist das Lotgutstäbchen 22 am Ende 29 ein Stop-off 25 (Fig. 8, 9) auf, der verhindert, dass Lot 10 des Lotgutstäbchens 22 aus dem Loch 7 heraustropft oder in den Hohlraum hineintropft.

Der Stop-off 25 benetzt vorzugsweise das Lotgutstäbchen 22. Der Stop-off kann eine Keramik oder eine Legierung aufweisen. Auf jeden Fall ist der Stop-off 25 aus einem anderem Material als das Material des Lotgutstäbchens 22. Vorzugsweise wird eine Legierung verwendet. Hierzu können bekannte Stop-off's aus dem Stand der Technik verwendet werden. Der Stop-off 25 kann als Folie, Schlicker, Paste usw. aufgetragen werden. Vorzugsweise wird eine Paste verwendet.

Vorzugsweise ist der Stop-off 25 nur auf der Stirnseite 28 des Stäbchens 22 und Drahtes 22 vorhanden (Fig. 9).
Solche Stäbchen 22 gemäß Figur 8, 9 können auch bei dem Verfahren gemäß Figur 1 bis Figur 6 verwendet werden.

Ebenso kann zuerst der Stop-off 25 in das Loch 7 eingebracht werden und das Lot 10, vorzugsweise das Stäbchen 22, wird danach in das Loch 7 eingebracht (Fig. 7).

Die Figur 10 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 11 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 12 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Lotgutstäbchen (22),
das an einem Ende (28) ein Stop-off (25) aufweist, insbesondere damit benetzt ist.

2. Lotgutstäbchen nach Anspruch 1,
bei dem das Lotgutstäbchen (22) eine Draht- oder Stabform aufweist.

3. Lotgutstäbchen nach Anspruch 1 oder 2,
bei dem der Stop-off (25) eine Keramik aufweist.

4. Lotgutstäbchen nach Anspruch 1 oder 2,
bei dem der Stop-off (25) eine Legierung aufweist.

5. Verfahren zur Belotung eines Lochs (7) in einem Substrat (19) mit einem Lot (10),
bei dem das Lot (10) in Form eines Drahtes (22) oder eines Stäbchens (22) verwendet wird,
insbesondere ein Lotgutstäbchen (22) nach Anspruch 1, 2, 3 oder 4 verwendet wird.

6. Verfahren zum Beschichten eines Substrats (19) mit einem Loch (7),
insbesondere Wiederbeschichten eines Substrats (19),
bei dem in ein Loch (7) Lot (10) eingebracht wird,
bevor eine Beschichtung (13) auf das Substrat (19) aufgebracht wird.

7. Verfahren nach Anspruch 6,
bei dem das Lot (10) in Form eines Lotgutstäbchens (22), insbesondere nach Anspruch 1, 2, 3 oder 4, verwendet wird.

8. Verfahren nach Anspruch 5, 6 oder 7,
bei dem in ein Bauteil (1, 120, 130, 155),
insbesondere in ein beschichtetes Bauteil (1, 120, 130, 155),
dort ein Loch (16) eingebracht wird,
wo kein Lot vorhanden ist.

9. Verfahren nach Anspruch 5, 6 oder 7,
bei dem in ein Bauteil (1, 120, 130, 155),
insbesondere in ein beschichtetes Bauteil (1, 120, 130, 155),
ein Loch (16) an der Stelle eingebracht wird,
an der vorher ein Lot (10, 22) eingebracht wurde.

10. Verfahren nach Anspruch 5 oder 7,
bei dem der Außendurchmesser oder Querschnitt des Lotgutstäbchens (22) dem Innendurchmesser oder dem Innenquerschnitt des Loches (7) entspricht.

11. Verfahren nach Anspruch 5, 6 oder 10,
bei dem in ein Loch (7) zuerst ein Stop-off (25) eingebracht wird und dann das Lot (10),
insbesondere in Form eines Stabes oder eines Drahtes.
